# EUROPÄISCHE PATENTSCHRIFT

(11) **EP 0 371 169 B1**
(45) Veröffentlichungstag und Bekanntmachung des Hinweises auf die Patenterteilung: **16.02.1994**
(21) Anmeldenummer: 88120087.7
(22) Anmeldetag: 01.12.1988
(51) Int. Cl.: H04Q 3/545, G06F 9/46

(54) **Verfahren zur Steuerung der Übernahme vermittlungstechnischer Aufgaben einerseits und betriebstechnischer und/oder sicherungstechnischer Aufgaben andererseits durch einen Prozessor der Zentralsteuereinheit eines Fernmeldevermittlungssystems**
Method for controlling the taking over of, on the one hand, switching-related tasks and, on the other hand, operational and/or protection-related tasks by a processor in the central control unit of a telecommunications switching system
Méthode pour commander la prise en charge, d'une part des tâches de commutation et d'autre part des tâches de service et/ou de sécurité par un processeur de l'organe de commande central d'un commutateur pour un système de télécommunication

(43) Veröffentlichungstag der Anmeldung: 06.06.1990
(73) Patentinhaber: SIEMENS AKTIENGESELLSCHAFT, 80333 München (DE)
(72) Erfinder: Clark, Mark, D-8000 München (DE); Hoogendoorn, Cornelis H. Ph. D., Prof., Johannesburg (ZA)

(56) Entgegenhaltungen:
- EP-A- 0 135 931
- PROCEEDINGS OF 25TH CONFERENCE ON DECISION AND CONTROL, Athens, 10.-12. Dezember 1986, Seiten 1697-1699, IEEE; A. KUMAR: "Adaptive load control of the central processor in a distributed system with a star topology"
- PROCEEDINGS OF THE TENTH INTERNATIONAL TELETRAFFIC CONGRESS, Montreal, 9.-15. Juni 1983, Band 2, "Session" 5.2, "Paper" 2, Seiten 1-6; B.T. DOSHI et al.:"Analysis of overload control schemes for a class of distributed switchingmachines"
- PROCEEDINGS OF THE TENTH INTERNATIONAL TELETRAFFIC CONGRESS, Montreal, 9.-15. Juni 1983, Band 1, "Session" 1.3, "Paper" 2, Seiten 1-7; M. EISENBERG: "A strict priority queuing system with overload control"
- PROCEEDINGS OF THE 11TH INTERNATIONAL TELETRAFFIC CONGRESS, Kyoto, 4.-11. September 1985, Teil 2, Seiten 760-766, Elsevier Science Publishers B.V.; Y.LEVY: "A class of scheduling policies for real-time processors with switchingsystem applications"

## Beschreibung

Die Erfindung bezieht sich auf ein Verfahren gemäß dem Oberbegriff des Anspruchs 1.

Zentralsteuereinheiten von Fernmeldevermittlungssystemen, insbesondere Fernsprechvermittlungssystemen haben Aufgaben unterschiedlicher Kategorien durchzuführen. Da sind zum einen vermittlungstechnische Aufgaben, zu denen im Falle der Fernsprechvermittlung die Überwachung der Teilnehmer auf Abheben und Rufnummernwahl, die Wegesuche, die Wegedurchschaltung, die Anschaltung von Signaltönen, die Gebührenerfassung, die Durchführung von Ansagen sowie die Ausführung von Facilities verschiedenster Art gehören. Zum anderen sind betriebs- und sicherungstechnische Aufgaben durchzuführen, zu denen im Falle der betriebstechnischen Aufgaben insbesondere Zuordnungen und Neuzuordnungen von Rufnummern zu Teilnehmeranschlüssen, die Steuerung der Zusammenarbeit der verschiedenen Organe des Vermittlungssystems in genereller, nicht auf die einzelne aktuelle Verbindung bezogener Art wie Gebührentarifänderungen, Speicherausbau und damit Adressenraumerweiterungen, Weiterausgabe des Vermittlungsnetzwerkes bzw. der Teilnehmeranschlüsse und im Falle der sicherungstechnischen Funktionen routinemäßige oder durch Alarme ausgelöste Fehlersuche bzw. Fehlereinkreisfunktionen gehören.

Für einen reibungslosen Ablauf des Betriebs eines Vermittlungssystems ist es wichtig, die Verfügbarkeit der Zentralsteuereinheit für die Durchführung der erwähnten Aufgaben den sich dauernd ändernden Bedürfnissen möglichst gut anzupassen. Insbesondere dann, wenn es sich bei einer solchen Zentralsteuereinheit um eine Multiprozessoreinheit handelt, bei der zumindest die vermittlungstechnischen Aufgaben von sämtlichen der Prozessoren übernommen werden können, ist ein Steuermechanismus erforderlich, durch den die Verteilung der Aufgaben auf die einzelnen Prozessoren in der Weise erfolgt, daß durch entsprechende Verteilung der vermittlungstechnischen Aufgaben der Anteil der zu Verlust gehender Verbindungsversuche möglichst gering ist und daß andererseits auch bei hohem Auslastungsgrad für wichtige betriebs-und/oder sicherungstechnische Aufgaben Kapazitäten freigehalten werden.

Bei einem bekannten Steuerungssystem (Proceedings of 25th conference on decision and control, Athens, 10.-12. Dezember, 1986, Seiten 1697-1699, IEEE; A. Kumar: "Adaptive load control of the central processor in a distributed system with a star topology"), bestehend aus einer Mehrzahl von peripheren Prozessoren und einem einzigen zentralen Prozessor, bei dem der zentrale Prozessor durch die peripheren Prozessoren mit der Abwicklung priorisierter Aufgaben beaufschlagt wird und außerdem weniger priorisierte Aufgaben durchzuführen hat, ist jedem der peripheren Prozessoren eine Zugangssteuerung zugeordnet, durch die festgelegt wird, in welchem Ausmaß an die peripheren Prozessoren gerichtete Anforderungen, die zu einer Beaufschlagung des zentralen Prozessors führen, abgewiesen werden. Dieses Ausmaß wird dynamisch bestimmt, wobei ein Mischbetrieb zwischen Proportionalsteuerung, bei der jeweils ein bestimmter Prozentsatz der Anforderungen abgewiesen wird und Schwellwertsteuerung vorliegt, bei dem zahlenmäßig über einer Schwelle liegende Anforderungen unberücksichtigt bleiben.

Die Aufgabe der Erfindung besteht darin, ein insbesondere für Multiprozessorsteuerungen eines Vermittlungssystems geeignetes Verfahren zur Steuerung der Übernahme vermittlungstechnischer Aufgaben einerseits und betriebstechnischer und/oder sicherungstechnischer Aufgaben andererseits anzugeben, das den Anforderungen an ein solches System im Hinblick auf möglichst geringen Verlust von Verbindungsversuchen und dabei aber ausreichender Gewährleistung der Abwicklung betriebs- und/oder sicherungstechnischer Aufgaben gerecht wird.

Diese Aufgabe wird durch die im Kennzeichen des Hauptanspruchs angegebenen Merkmale gelöst. Danach sind bei der Durchführung der beiden Arten von Aufgaben durch einen einzigen Prozessor Zeitspannen für die Bearbeitung dieser beiden Arten von Aufgaben festgelegt, die jedoch laufend den praktischen Bedürfnissen angepaßt werden, wobei die Steuerung der Übernahme mit Hilfe eines 1-Bit-Binärsignals, eines sogenannten Drosselbits, erfolgt.

Gemäß weiterer Ausgestaltung der Erfindung erfolgt die Anpassung der Längenverhältnisse der genannten beiden Zeitspannen derart, daß je nach dem, ob die nicht vollständige Ausnutzung der ersten Zeitspanne oder die Überschreitung dieser ersten Zeitspanne bei der Ausführung vermittlungstechnischer Aufgaben auf einen geringeren Anfall vermittlungstechnischer Aufgaben bzw. auf einen geringeren Anfall betriebs- und/oder sicherungstechnischer Aufgaben als angenommen zurückzuführen ist oder ob geringfügige Unterschreitungen oder Überschreitungen lediglich darauf zurückzuführen sind, daß einmal in Angriff genommene Aufgaben auch dann zu Ende geführt werden, wenn die Zeitgrenze zwischen erster und zweiter Zeitspanne erreicht ist, in unterschiedlicher Weise behandelt werden. Im einen Fall wird nämlich eine Neufestlegung der Längen der Zeitspannen den aktuellen Anfall der Aufgaben entsprechend vorgenommen, im anderen Fall wird dagegen ein Ausgleich dafür vorgenommen, daß die eine oder andere Zeitspanne zu einem Bruchteil für die Abwicklung von Aufgaben ausgenutzt worden ist, für die sie nicht vorgesehen war.

Noch eine andere Ausgestaltung der Erfindung dient der Anpassung des erfindungsgemäßen Verteilungsverfahrens an die Verhältnisse einer Multiprozessorzentralsteuereinheit, bei der eine Mehrzahl von Prozessoren für die Durchführung vermittlungstechnischer Aufgaben sowie ein gedoppelter Prozessor vorhanden ist, der in erster Linie die Durchführung betriebstechniscer und/oder sicherungstechnischer Aufgaben dient, jedoch auch vermittlungstechnische Aufgaben übernehmen kann. Bei diesem angepaßten Verfahren wird so vorgegangen, daß die Übernahme vermittlungstechnischer Aufgaben durch den genannten gedoppelten Prozessor immer nur dann erfolgt, wenn bei den nur für die Durchführung vermittlungstechnischer Aufgabe vorgesehenen Prozessoren keine Kapazität mehr frei ist.

Nachstehend wird die Erfindung anhand eines Ausführungsbeispiels, das auf die Anwendung auf eine Multiprozessor-Zentralsteuereinheit der obengenannten Art zugeschnitten ist, näher erläutert, wobei auf eine Figur Bezug genommen wird.

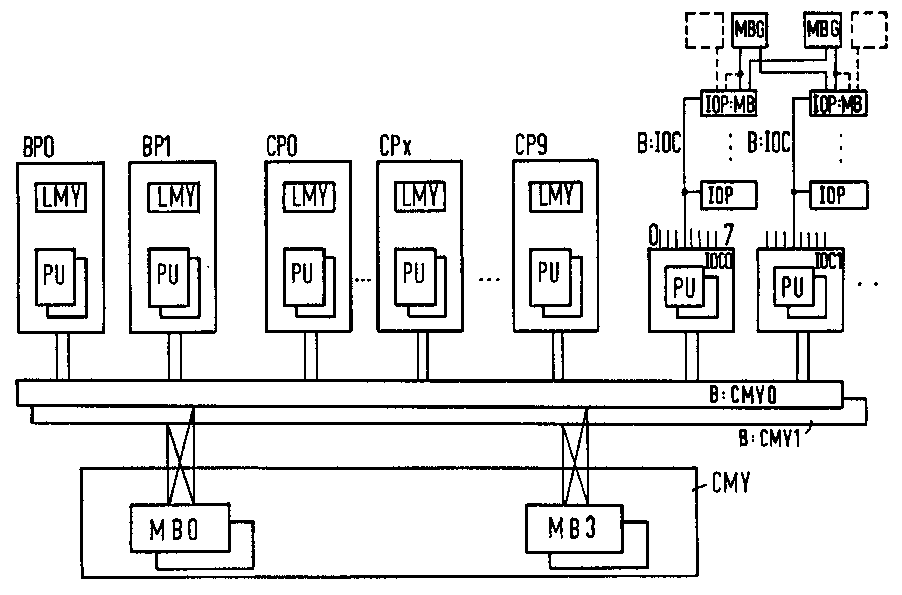

Die Figur zeigt eine Zentralsteuereinheit eines Fernsprechvermittlungssystems, zu der zwei Basisprozessoren BP0, BP1, sowie 10 weitere Prozessoren CP0 bis CP9 gehören, die über ein gedoppeltes Bussystem B:CMY0, B:CMY1 zusammenarbeiten.

Von den Basisprozessoren BP0 und BP1 ist jeweils nur einer als aktiver Prozessor wirksam, wogegen der andere währenddessen als Standby-Prozessor bereitsteht, die Rolle des anderen, des aktiven Prozessors zu übernehmen. Diese Basisprozessoren können sowohl vermittlungstechnische Aufgaben als auf betriebstechnische und/oder sicherungstechnische Aufgaben übernehmen.

Die Prozessoren CP0 bis CP9 hingegen sind nur für die Durchführung vermittlungstechnischer Funktionen vorgesehen.

Jeder der erwähnten Prozessoren enthält neben der eigentlichen Prozessoreinheit PU, die ebenfalls gedoppelt sein kann, jeweils einen prozessorindividuellen lokalen Speicher LMY.

An das erwähnte Bussystem B:CMY0; B:CMY1 ist außerdem ein Hauptspeicher CMY angeschlossen, der seinerseits aus mehreren gedoppelten Speicherbanken MB0 bis MB3 besteht. Sämtliche der angeschlossenen Prozessoren haben Zugriff auf alle Daten dieses Hauptspeichers, soweit nicht die Berechtigung des Zugriffs eingeschränkt wird.

Die Figur zeigt ferner periphere Einheiten MBG, die mittelbar oder unmittelbar auf die Leitungen des Koppelfeldes der Vermittlungsstelle einwirken, z.B. im Rahmen der Wegesuche, Durchschaltung, Signalisierung usw. Sie besitzen im gezeigten Beispiel eigene Eingabe-Ausgabe-Einheiten IOP:MB. Mehrere solcher Eingabe- Ausgabe-Einheiten sind an lokale Busse B:IOC angeschlossen. Über Eingabe-Ausgabe-Prozessoren IOC0, IOC1 besteht eine Verbindung dieser Eingabe-Ausgabeeinheiten IOP:MB mit dem Bussystem B:CMY0, B:CMY1.

Im Zusammenhang mit vermittlungstechnischen Aufgaben stehende und von der vermittlungstechnischen Peripherie kommenden Daten werden über die erwähnten peripheren Einheiten MBG in Eingabelisten abgelegt, die Bestandteil des gemeinsamen Speichers CMY sind. Wenn einer der Prozessoren BP0, BP1 bzw. CP0 bis CP9 vermittlungstechnische Aufgaben ausführen möchte, prüft er, ob in der erwähnten Eingabeliste entsprechende Daten vorhanden sind und entnimmt solche, sofern dies der Fall ist, um einen Vermittlungsprozeß auszuführen. Während dies bei den Prozessoren CP0 bis CP9, die ausschließlich der Abwicklung vermittlungstechnischer Funktionen dienen, ohne Einschränkung geschieht, wird bei dem jeweils aktiven Basisprozessor BP0 oder BP1, der, wie dargelegt, in erster Linie der Abwicklung betriebstechnischer und/oder sicherungstechnischer Aufgaben dient, dies davon abhängig gemacht, ob solche betriebstechnischen und/oder sicherungstechnischen Aufgaben überhaupt anstehen und ob ein 1-Bit-Binärsignal, das sogenannte Drosselbit, einen bestimmten Binärwert annimmt, beispielsweise den Binärwert 0. Dieses Drosselbit wird vom Betriebssystem des Basisprozessors geliefert. Es ist dabei Sorge dafür getragen, daß dieser Binärwert 0 längstens während einer ersten Zeitspanne eingenommen wird, an die sich eine zweite Zeitspanne anschließt, in der das Drosselbit den Binärwert 1 annimmt und in der betriebstechnische und/oder sicherungstechnische Aufgaben durch den Basisprozessor ausgeführt werden. Sofern keine der letztgenannten Aufgaben anstehen, wird der die Übernahme vermittlungstechnischer Aufgaben an sich verhindernde Binärwert des Drosselbits ignoriert, d.h. es werden dennoch weiterhin vermittlungstechnische Aufgaben übernommen und ausgeführt.

Die Übernahme vermittlungstechnischer Aufgaben durch einen der Basisprozessoren BP0 oder BP1 ist auch davon abhängig, ob bei den übrigen Prozessoren CP0 bis CP9 noch Verarbeitungskapazitäten frei sind. Um dies anzuzeigen, ist ein weiteres 1 Bit-Binärsignal, das sogenannte Last-Bit vorgesehen, das von jedem der Prozessoren CP0 bis CP9 beeinflußt werden kann, und immer dann auf den Binärwert 1 gebracht wird, wenn einer dieser Prozessoren bei der routinemäßigen Abfrage der Eingabeliste nach vorangegangener Abwicklung einer vermittlungstechnischen Aufgabe dort keine auf eine neue vermittlungstechnische Aufgabe hinweisenden Daten mehr vorfindet. Das Last-Bit wird durch den im aktiven Betrieb arbeitenden Basisprozessor BP0 oder BP1 periodisch, beispielsweise alle 50 ms in den Binärzustand gebracht, der der Auslastung mit vermittlungstechnischen Aufgaben entspricht, im Falle des beschriebenen Ausführungsbeispiels in den Binärzustand 0, wobei der bisherige Binärzustand des Last-Bits auf das Drossel-Bit kopiert wird. War dieser Binärwert des Last-Bits bisher 1, was das vorhandensein freier Kapazität bei wenigstens einem der Prozessoren CP0 bis CP9 bedeutet, so bekommt also das Drosselbit einen Binärwert, der die Übernahme weiterer vermittlungstechnischer Aufgaben verhindert.

Die vorerwähnten beiden Zeitspannen, nämlich die erste, nach der ein den Binärwert 0 aufweisendes Drosselbit mit der Folge der Über nahme vermittlungstechnischer Aufgaben durch einen der Basisprozessoren BP0, BP1, auf den Binärwert 1 wechselt, so daß während der zweiten Zeitspanne nunmehr betriebs- und/oder sicherungstechnische Aufgaben abgewickelt werden, wird laufend den jeweiligen Verhältnissen angepaßt. Im Verlaufe eines sogenannten Adaptionsintervalls, das mehrere, beispielsweise drei der sich periodisch wiederholenden ersten und zweiten Zeitspannen umfaßt, werden die Zeiten der Nichtausnutzung bzw. der Überschreitung der ersten Zeitspannen für die Durchführung vermittlungstechnischer Aufgaben ermittelt und aufsummiert.

Wenn sich dabei ergibt, daß die Ausnutzung der ersten Zeitspanne für die Abwicklung vermittlungstechnische Aufgaben unterhalb einer unteren Grenze liegt, dann bedeutet dies, daß wenig vermittlungstechnische Last übertragen worden ist, da der größte Teil derselben von den übrigen Prozessoren CP00 bis CP9 übernommen werden konnte. Es wird daher für die erste Zeitspanne ein neuer, niedrigerer Wert festgelegt, der über das nachfolgende Adaptionsintervall hinweg beibehalten wird. Ergibt sich hingegen, daß eine obere Grenze für Überschreitungen der ersten Zeitspanne überschritten worden ist, dann bedeutet dies, daß relativ wenig betriebstechnische und/oder sicherungstechnische Aufgaben vorgelegen haben, so daß wie vorstehend angegeben, die Wirkung des Drosselbits nicht zum Tragen kam. Auch in diesem Fall erfolgt eine Neufestlegung der ersten Zeitspanne, diesmal zu einem größeren Wert hin.

Wenn hingegen sich innerhalb eines Adaptionsintervalls insgesamt eine Zeit für die Nichtausnutzung der ersten Zeitspanne ergibt, die zwischen 0 und der vorerwähnten Untergrenze liegt, dann ist dies ein Indiz dafür, daß die volle Dauer der ersten Zeitspanne deswegen nicht für vermittlungstechnische Aufgaben ausgenutzt werden konnte, weil eine betriebstechnische und oder sicherungstechnische Aufgabe in den jeweils vorangegangenen zweiten Zeitspannen nicht zu Ende geführt werden konnte und daher noch einen Bruchteil der nachfolgenden ersten Zeitspanne in Anspruch genommen hat. In diesem Fall wird zum Ausgleich der Zeitbilanz die erste Zeitspanne entsprechend verlängert. Wenn sich dagegen ergibt, daß der Wert für die Überschreitung der ersten Zeitspannen bei der Ausführung vermittlungstechnischer Aufgaben zwischen 0 und der vorerwähnten Obergrenze liegt, dann bedeutet dies, daß in wenigstens einer der ersten Zeitspannen des Adaptionsintervalls die Zeitdauer für die Abwicklung einer begonnenen vermittlungstechnischen Aufgabe nicht ausgereicht hat und damit in der nachfolgenden zweiten Zeitspanne die Übernahme einer betriebstechnischen und/oder sicherungstechnischen Aufgabe erst verspätet beginnen konnte. Es werden daher zum Ausgleich der Zeitbilanz zugunsten betriebstechnischer und/oder sicherungstechnischer Aufgaben für das nachfolgende Adaptionsintervall die ersten Zeitspannen entsprechend verkürzt bzw. die zweiten Zeitspannen entsprechend verlängert.

Das erfindungsgemäße Verfahren wurde vorstehend anhand einer Multiprozessor-Zentralsteuereinheit erläutert. Es ist jedoch auch bei einer Monoprozessor-Zentralsteuereinheit anwendbar, die also lediglich einen gedoppelten Prozessor aufweist, der in jedem Falle vermittlungstechnische Aufgaben neben betriebstechnischen und/oder sicherungstechnischen Aufgaben zu erfüllen hat. Das vorerwähnte Last-Bit weist bei einer solchen Monoprozessorsteuerung dauernd den Binärwert 0 auf, wogegen die sonstigen im Zusammenhang mit der Multiprozessor-Zentralsteuereinheit beschriebenen Verhältnisse also die Festlegung einer ersten und zweiten Zeitspanne für die Übernahme vermittlungstechnischer und betriebstechnischer und/oder sicherungstechnischer Aufgaben unter Verwendung eines Drosselbits sowie die adaptive Anpassung dieser Zeitspannen an die jeweiligen Verhältnisse im Zuge eines Adaptionsintervalls in gleicher Weise vorliegen.

## Patentansprüche

1. Verfahren zur Steuerung der Übernahme vermittlungstechnischer Aufgaben einerseits und betriebstechnischer und/oder sicherungstechnischer Aufgaben andererseits durch einen Prozessor der Zentralsteuereinheit eines Fernmelde-Vermittlungssystems, insbesondere Fernsprech-Vermittlungssystems,
**gekennzeichnet** durch
folgende Merkmale:
a) Sofern betriebstechnische und/oder sicherungstechnische Aufgaben anstehen, wird die Übernahmer einer neuen vermittlungstechnischen Aufgabe davon abhängig gemacht, ob ein 1-Bit-Binärsignal (Drosselbit), den entsprechenden Binärwert aufweist,
b) dieser Binärwert wird längstens während einer sich periodisch wiederholenden Zeitspanne eingenommen, an die sich eine zweite Zeitspanne anschließt, in der nur die Übernahme betriebstechnischer und/oder sicherungstechnischer Aufgaben möglich ist,
c) das Längenverhältnis von erster und zweiter Zeitspanne wird laufend aktualisiert.

2. Verfahren nach Anspruch 1,
**gekennzeichnet** durch
folgende Merkmale:
a) Jeweils nach mehrfacher Wiederholung der ersten und zweiten Zeitspanne wird deren Längenrelation in Abhängigkeit vom kommulierten Ausmaß der Benutzung oder der Überschreitung der ersten Zeitspanne bei der Ausführung vermittlungstechnischer Aufgaben folgendermaßen festgelegt:
b) Das Unterschreiten einer Untergrenze für die Benutzung der ersten Zeitspanne bzw. das Überschreiten einer Obergrenze für das Überschreiten der ersten Zeitspanne bei der Ausführung vermittlungstechnischer Aufgaben führt zur Festlegung einer entsprechend kürzeren bzw. entsprechend längeren ersten Zeitspanne,
c) eine oberhalb der genannten Untergrenze liegende, jedoch nicht ausschließliche Benutzung der ersten Zeitspanne bei der Ausführung vermittlungstechnischer Aufgaben führt zu einer dem Ausmaß der Nichtbenutzung entsprechenden Verlängerung der ersten Zeitspanne,
d) eine die genannte Obergrenze nicht erreichende Überschreitung der ersten Zeitspanne bei der Ausführung vermittlungstechnischer Aufgaben führt zu einer dem Ausmaß der Überschreitung entsprechenden Verkürzung der ersten Zeitspanne.

3. Verfahren nach Anspruch 1 oder 2, wobei der gegebenenfalls gedoppelte Prozessor (BP0, BP1) Bestandteil einer MultiprozessorZentralsteuereinheit ist, deren übrige Prozessoren (CP0 bis CP9) ausschließlich der Ausführung vermittlungstechnischer Aufgaben dienen,
**gekennzeichnet** durch
folgende Merkmale:
a) Ein weiteres 1-Bit-Binärsignal (Last-Bit) nimmt seinen einen bestimmten Binärwert an, sobald für einen der übrigen zur Verarbeitung bereiten Prozessoren (CP0 bis CP9) keine vermittlungstechnischen Aufgaben vorhanden sind,
b) wenn dieser Binärwert eingenommen wird, folgt eine Änderung des erstgenannt 1-Bit-Binärsignals (Drosselbits) zu dem Binärwert, bei dem die Übernahme vermittlungstechnischer Aufgaben durch den gegebenenfalls gedoppelten Prozessor (BP0, BP1) unterbleibt, sofern dieser Binärwert nicht schon eingenommen ist.

4. Verfahren nach Anspruch 3,
**gekennzeichnet** durch
folgende Merkmale:
a) Das Last-Bit wird periodisch zur Annahme des anderen Binärwerts gebracht, der die Auslastung der übrigen Prozessoren durch vermittlungstechnische Aufgaben signalisiert, sofern er nicht schon vorliegt,
b) das Drosselbit wird zur Annahme des Binärwerts gebracht, der dem bis dahin vorliegenden Binärwert des Lastbits entspricht, sofern er nicht schon vorliegt.

## Claims

1. Method for controlling the taking-over of, on the one hand, switching tasks and, on the other hand operational and/or protection tasks by a processor in the common control unit of a telecommunications switching system, particularly a telephone switching system, characterized by the following features:
a) If operational and/or protection tasks have to be handled, the taking-over of a new switching task is made dependent on the fact whether a one-bit binary signal (control bit) exhibits the appropriate binary value,
b) this binary value is taken up at the latest during a periodically repeated time interval which is followed by a second time interval in which only the taking-over of operational and/or protection tasks is possible,
c) the ratio of the lengths of the first and second time interval is continuously updated.

2. Method according to Claim 1, characterized by the following features:
a) In each case after a number of repetitions of the first and second time interval, the relationship of their lengths is determined in dependence on the accumulated extent of use or on the transgression of the first time interval during the execution of switching tasks, as follows:
b) dropping below a lower limit for the use of the first time interval or exceeding an upper limit for the transgression of the first time interval during the execution of switching tasks leads to a correspondingly shorter or, respectively, correspondingly longer first time interval to be determined,
c) use of the first time interval which is above the said lower limit but is not exclusive in the execution of switching tasks leads to an extension of the first time interval corresponding to the extent of non-use,
d) transgression of the first time interval which does not reach the said upper limit during the execution of switching tasks leads to a shortening of the first time interval corresponding to the extent of the transgression.

3. Method according to Claim 1 or 2, the possibly duplicated processor (BP0, BP1) being a component part of a multiprocessor-type, common control unit, the remaining processors of which (CP0 to CP9) are exclusively used for executing switching tasks, characterized by the following features:
a) a further one-bit binary signal (load bit) assumes its one specific binary value as soon as there are no switching tasks for one of the remaining processors ready for processing (CP0 to CP9),
b) when this binary value is taken up, the first-mentioned one-bit binary signal (control bit) changes to the binary value with which the taking-over of switching tasks by the possibly duplicated processor (BP0, BP1) does not take place unless this boundary value has already been taken up.

4. Method according to Claim 3, characterized by the following features:
a) the load bit is periodically made to assume the other binary value which signals the utilization of the remaining processors by switching tasks, unless it is already at this value,
b) the control bit is made to assume the binary value which corresponds to the binary value of the load bit present until then, unless it is already at this value.

## Revendications

1. Procédé pour commander la prise en charge de tâches de commutation d'une part et de tâches de fonctionnement et/ou de tâches de sécurité d'autre part par un processeur de l'unité centrale de commande d'un système de commutation de télécommunication, notamment d'un système de commutation téléphonique, caractérisé par les caractéristiques suivantes :
a) dans la mesure où on est en présence de tâches de service et/ou de tâches de sécurité, la prise en charge d'une nouvelle tâche technique de commutation est rendue dépendante du fait qu'un signal binaire à 1 bit (bit d'étranglement) possède ou non la valeur binaire correspondante,
b) cette valeur binaire est acceptée tout au plus pendant un intervalle de temps qui se répète périodiquement et auquel succède un second intervalle de temps, dans lequel seule est possible la prise en charge de tâches de service et/ou de tâches de sécurité,
c) le rapport des durées des premier et second intervalles de temps est actualisé de façon permanente.

2. Procédé suivant la revendication 1, caractérisé par les caractéristiques suivantes :
a) après une répétition multiple des premier et second intervalles de temps, la relation entre leurs durées est fixée de la manière suivante en fonction du degré cumulé d'utilisation ou du dépassement du premier intervalle de temps lors de l'exécution de tâches de commutation :
b) le dépassement par valeurs inférieures d'une limite inférieure pour l'utilisation du premier intervalle de temps ou le dépassement par valeur supérieure d'une limite supérieure pour le dépassement du premier intervalle de temps lors de l'exécution de tâches de commutation conduit à la fixation d'un premier intervalle de temps plus court ou plus long,
c) une utilisation, qui va au-delà de la limite inférieure indiquée, mais n'est pas exclusive, du premier intervalle de temps lors de l'exécution de tâches de commutation conduit à un prolongement, qui correspond au degré de non utilisation, du premier intervalle de temps,
d) un dépassement, qui n'atteint pas la limite supérieure indiquée, du premier intervalle de temps lors de l'exécution de tâches de commutation conduit à une réduction du premier intervalle de temps, qui correspond au degré de dépassement.

3. Procédé suivant la revendication 1 ou 2, selon lequel le processeur éventuellement doublé (BP0, BP1) fait partie d'une unité de commande centrale à processeurs multiples, dont les autres processeurs (CP0 à CP9) sont utilisés exclusivement pour l'exécution de tâches de commutation, caractérisé par les caractéristiques suivantes :
a) un autre signal binaire à 1 bit (dernier bit) prend l'une de ses valeurs binaires déterminées, dès qu'aucune tâche de commutation n'est présente pour l'un des autres processeurs (CP0 à CP9) prêts pour le traitement,
b) lorsque cette valeur binaire est prise, il s'ensuit une modification du signal binaire à 1 bit (bit d'étranglement) mentionné en premier, qui l'amène à prendre une valeur binaire, pour laquelle la prise en charge de tâches de commutation par le processeur (BP0, BP1) éventuellement doublé est suspendue dans la mesure où cette valeur binaire n'est pas déjà prise.

4. Procédé suivant la revendication 3, caractérisé par les caractéristiques suivantes :
a) le dernier bit est amené périodiquement à prendre l'autre valeur binaire, qui signale la charge des autres processeurs par des tâches de commutation, dans la mesure où cette valeur n'est pas déjà présente,
b) le bit d'étranglement est amené à prendre la valeur binaire, qui correspond à la valeur binaire, présente jusqu'alors, du dernier bit, dans la mesure où cette valeur n'est pas déjà présente.
